# FASCICULE DE BREVET EUROPEEN

(11) **EP 3 835 355 B1**
(45) Date de publication et mention de la délivrance du brevet: **19.10.2022**
(21) Numéro de dépôt: 20210376.8
(22) Date de dépôt: 27.11.2020
(51) Int. Cl.: C08L 33/24, C11D 3/37, C08F 2/32, C11D 11/00, C08F 220/58

(54) **COMPOSITION DÉTERGENTE COMPRENANT UN LATEX INVERSE COMBINANT UN AGENT SÉQUESTRANT PARTICULIER ET UN POLYÉLECTROLYTE COMPRENANT UNE FONCTION ACIDE FORT ET UNE FONCTION NEUTRE**
WASCHMITTELZUSAMMENSETZUNG, DIE EINEN INVERSEN LATEX UMFASST, DER EINEN SPEZIELLEN KOMPLEXBILDNER UND EINEN POLYELEKTROLYTEN MIT EINER STARKEN SÄUREFUNKTION UND EINER NEUTRALFUNKTION KOMBINIERT
DETERGENT COMPOSITION COMPRISING AN INVERSE LATEX COMBINING A SPECIFIC SEQUESTERING AGENT AND A POLYELECTROLYTE COMPRISING A HIGH ACID FUNCTION AND A NEUTRAL FUNCTION

(30) Priorité: 09.12.2019 FR 1913975
(43) Date de publication de la demande: 16.06.2021
(73) Titulaire: Societe D Exploitation De Produits Pour Les Industries Chimiques Seppic, 75007 Paris (FR)
(72) Inventeur: BODOC, Miruna, 81100 Castres (FR); COLAS, Aurélie, 92250 La Garenne Colombes (FR)
(74) Mandataire: Air Liquide

(56) Documents cités:
- WO-A1-2019/102115
- US-A1- 2017 335 254
- US-A1- 2018 249 704
- JOANNA S. JAWORSKA ET AL: "Environmental risk assessment for trisodium [S,S]-ethylene diamine disuccinate, a biodegradable chelator used in detergent applications", CHEMOSPHERE, vol. 38, no. 15, 1 juin 1999 (1999-06-01), pages 3597-3625, XP055717295, GB ISSN: 0045-6535, DOI: 10.1016/S0045-6535(98)00573-6

## Description

Ces formulations détergentes ou nettoyantes à usage industriel ou ménager sont soit alcalines soit acides. Les formulations détergentes ou nettoyantes alcalines sont généralement utilisées pour éliminer des surfaces solides, les salissures de matières grasses, alors que les formulations détergentes ou nettoyantes acides le sont, non seulement pour éliminer les salissures, et mais aussi pour détartrer lesdites surfaces. Elles sont particulièrement adaptées au nettoyage et au détartrage d'installations de l'industrie agro-alimentaire, ou au détartrage d'équipements électroménagers, tels que lave-vaisselle et machines à café. Elles sont aussi utilisées pour éliminer des résidus de béton ou de ciment, et pour des opérations de nettoyage de graisses présentes en profondeur sur des surfaces de béton avant toute opération de peinture desdites surfaces de béton. Les formulations détergentes acides ne doivent ne pas provoquer une formation importante de mousse lors de l'opération de nettoyage en présence de la salissure à traiter, elles doivent avoir de bonnes propriétés mouillantes et détergentes. Les formulations détergentes ou nettoyantes à usage industriel ou ménager se présentent sous forme de poudres, de concentrés, de liquides tels que les émulsions, et selon les cas, sont mises en œuvre directement ou après dilution dans un solvant approprié. Sous forme liquide, telle que les émulsions, elles comportent des modificateurs de rhéologie lors de leur fabrication.

Parmi les polymères modificateurs de rhéologie des phases polaires, nous pouvons citer des polymères naturels ou bien des polymères synthétiques, et notamment les polymères de type polyélectrolyte, anionique ou cationique, amphiphile, linéaires ou ramifiés, réticulés ou non réticulés. Ces polymères, une fois introduits dans des phases polaires présentent la propriété de se déployer sous l'effet des répulsions électrostatiques dues à la présence des charges négatives et/ou positives sur le squelette polymérique, linéaire ou ramifié, non réticulé ou réticulé. Les modificateurs de rhéologie apportent à la fois une augmentation de la viscosité de la phase polaire, ainsi qu'une certaine consistance et/ou un effet stabilisant conféré à la formule détergente ou nettoyante à épaissir.

Afin de répondre aux besoins des consommateurs et d'améliorer les formulations détergentes, les scientifiques ont mis au point de nouveaux systèmes polymériques innovants et variés. Ainsi, les polymères utilisés dans la détergence ou le nettoyage peuvent jouer un rôle en tant qu'agents filmogènes, modificateurs de rhéologie, permettre la stabilisation des phases grasses dans les émulsions (de type eau-dans-huile ou huile -dans-eau) ou la stabilisation de particules (pigments ou charges), ou encore conférer des propriétés de mise en œuvre particulières (facilité de préhension et d'application, etc), ayant également un impact direct sur l'aspect de la formule (translucide ou opaque).

Les polymères modificateurs de rhéologie de phase aqueuse, principalement des polyélectrolytes, résultent de la polymérisation radicalaire de monomères de type (méth)acrylate, c'est-à-dire d'esters dérivés de l'acide acrylique ou de l'acide méthacryliques, ou encore des dérivés d'acrylamide.

Aujourd'hui ces polymères, pouvant se présenter sous la forme de latex inverse, de latex inverse concentré, ou de poudre permettent de répondre aux besoins des clients en terme de performances épaississantes, dans un solvant polaire, comme l'eau par exemple. Les gels aqueux obtenus une fois ces polymères dispersés dans l'eau présentent un aspect lisse, exempt de grains ou grumeaux, avec une facilité de préhension et d'application.

La forme liquide, connu sous le nom "latex inverse auto-inversible", ou sa forme liquide concentrée, est une composition se présentant sous forme d'émulsion eau-dans-huile et comprend:
- une phase aqueuse, elle-même comprenant au moins un polymère de type polyélectrolyte, de type anionique, ou cationique, ou ampholyte, linéaire et/ou branché et/ou réticulé
- une phase grasse comprenant au moins une huile
- au moins un tensioactif (S₁) émulsionnant de type eau-dans-huile,
- au moins un tensioactif (S₂) émulsionnant de type huile-dans-eau,
ledit polymère étant obtenu par la mise en œuvre d'un procédé polymérisation radicalaire en émulsion inverse.

La polymérisation radicalaire est connue pour sa sensibilité à la présence d'impuretés même en faibles quantités. Des composés qui peuvent induire une décroissance de la vitesse de polymérisation à faible concentration sont connus comme des inhibiteurs ou des retardateurs. Néanmoins la distinction entre ces deux effets n'est pas toujours simple, et le même composé peut avoir les deux contributions néfastes selon sa concentration dans le milieu ou la nature du des monomères et du milieu de réaction. Des performances reproductibles des polymères épaississants de phases aqueuse doivent être garanties afin d'assurer une qualité constante des formulations de détergence ou de nettoyage contenant ces polymères. Pour cela, les fabricants industriels doivent s'assurer que les réactions de polymérisations suivent de façon répétable la même cinétique, plus particulièrement au niveau de la durée d'inhibition, de l'exothermie de réaction (°C/min), et de la durée totale de la réaction de polymérisation dans le temps. Etant donné ces contraintes, une attention particulière est attribuée aux facteurs pouvant influencer le démarrage de la réaction de polymérisation radicalaire, par exemple la présence de l'oxygène qui peut retarder la réaction de polymérisation en réagissant avec les radicaux générés. Ces nouveaux radicaux péroxyde présente une réactivité plus faible, la capacité d'initiation étant diminuée. Ceci se traduit par une étape d'initiation et une vitesse de propagation plus faible, donc in fine aboutissant à des polymères ayant des propriétés épaississantes différentes. Une étape de désoxygénation du milieu notamment par une purge avec de l'azote avant démarrage de la réaction de polymérisation s'avère ainsi nécessaire. Un autre facteur impactant directement la polymérisation est la présence d'espèces métalliques (Fe²⁺, Fe³⁺, Cu²⁺,...) qui, à leur tour génèrent un effet d'inhibition. Dans ce cas, l'inhibition peut se produire lors de la phase d'amorçage par la réaction des radicaux amorceurs avec des impuretés métalliques, de sorte que le centre radicalaire actif devient alors incapable de fixer une autre unité monomérique et devient inactif lors de la polymérisation.

Les ions métalliques cités précédemment peuvent potentiellement provenir des matières premières ou bien des installations.

Les monomères utilisés pour la préparation de latex inverses auto-inversibles peuvent présenter des traces de cations métalliques. De la même façon, il n'est pas impossible d'envisager la présence de contaminants métalliques dans les installations industrielles accueillant les réactions de polymérisation. Dans la plupart des cas, les installations sont réalisées en acier inoxydable (couramment appelé inox ou acier inox), et nous retrouvons plusieurs types d'acier inoxydable qui diffèrent selon leur composition. L'inox est un alliage à base de fer, additionné de nickel, de chrome, ou de molybdène dans certains cas. C'est le chrome qui confère à l'inox ses propriétés anti-oxydantes, car en présence d'oxygène, il est capable de régénérer tout seul sa couche d'oxyde de chrome de surface appelée couche passive.

Néanmoins, il n'est pas impossible qu'en contact prolongé avec des sources de pollution, acides, humidité, embruns, poussières chargées en fer, ou en cas de rayures profondes, la couche de protection va alors se dé-passiver (donc s'activer) et l'inox va s'oxyder plus vite qu'il sera capable de se protéger. Dans ces cas, nous pouvons retrouver l'apparition de la rouille, donc une source de contaminants métalliques à base de fer.

Compte tenu des risques associés à la présence de toutes ces sources de contaminants métalliques, l'utilisation d'un agent séquestrant est incontournable. Le produit généralement utilisé est le sel pentasodique de l'acide diethylenetriaminepentaacetic (connu également sous le nom commercial de Versenex^{™} 80). Le document WO 2019/102115 A1 décrit un latex inverse auto-inversible utilisé dans des composition détergentes préparé en présence de cet agent séquestrant.

Cependant l'évolution de la réglementation européenne concernant la classification du sel pentasodique de l'acide diethylenetriaminepentaacetic nous amène à rechercher une solution alternative comme agent séquestrant pour la préparation de latex inverse auto-inversible utilisable pour la préparation de formulations détergentes ou de nettoyage.

Partant de là, un problème qui se pose est de fournir une composition détergente améliorée, c'est-à-dire efficace et présentant des propriétés plus en conformité avec l'évolution de la réglementation.

Une solution de la présente invention est une composition détergente (F) à usage ménager ou industriel comprenant comme agent épaississant un latex inverse auto-inversible comprenant une phase aqueuse comprenant:
a) Un polyélectrolyte anionique réticulé (P) constitué de :
   - Au moins une première unité monomérique issue de l'acide 2-méthyl-2-[(1-oxo-2-propényl) amino] 1-propanesulfonique sous forme d'acide libre ou partiellement ou totalement salifiée ; et
   - Au moins une deuxième unité monomérique issue d'au moins un monomère choisi parmi les éléments du groupe constitué par l'acrylate de (2-hydroxy éthyle), l'acrylate de (2,3-dihydroxy propyle), le méthacrylate de (2-hydroxy éthyle), le méthacrylate de (2,3-dihydroxypropyle), ou le vinyl pyrrolidone; et
   - au moins une unité monomérique issue d'un monomère de réticulation (AR) polyéthylénique,
b) Au moins un composé séquestrant (SQ) choisi parmi les éléments du groupe constitué par l'éthylenediamine disuccinique acide sous forme de sel trisodique, le sel tétrasodique du glutamique acide, N,N diacetic, et le sel de sodium de l'acide imminosuccinique.

Par « composition détergente », on entend au sens de la présente invention des compositions liquides à 20°C, conçues et utilisées pour le nettoyage de différents types de surfaces, comme par exemple les fibres textiles, les surfaces solides de différentes natures comme par exemple le verre, la céramique, les carrelages, le bois, le métal, les matériaux composites. Ces « compositions détergentes» trouvent leurs applications pour nettoyer lesdites surfaces solides de salissures, comme par exemple le nettoyage de la vaisselle manuellement ou par l'intermédiaire d'une machine lave-vaisselle, des bouteilles, du linge manuellement ou par l'intermédiaire d'une machine lave-linge, des sols, des surfaces métalliques souillées par des graisses, les vitres, les toilettes, les cuves de stockage.

Notons que la composition détergente sera de préférence liquide et pourra être à usage ménager ou industriel.

Parmi ces compositions aqueuses liquides détergentes destinées à la détergence de surfaces solides pour des applications ménagères ou industrielles, on peut distinguer les compositions nettoyantes aqueuses alcalines et les compositions nettoyantes aqueuses acides. De telles compositions aqueuses liquides détergentes à usage ménager ou industriel peuvent se présenter sous la forme d'une solution, d'un gel, d'une émulsion de type huile-dans-eau ou de type eau-dans-huile, sous la forme d'une dispersion.

Selon le cas, la composition détergente selon l'invention peut présenter une ou plusieurs des caractéristiques suivantes :
- L'agent séquestrant (SQ) est l'éthylenediamine disuccinique acide sous forme de sel trisodique
- la phase aqueuse du latex inverse comprend au moins 0,01% molaire de l'agent séquestrant (SQ) et plus particulièrement au moins 0,01% molaire de l'éthylenediamine disuccinique acide sous forme de sel trisodique ;
- le monomère de réticulation (AR) polyéthylénique est choisi parmi le méthylènebis(acrylamide), le diméthacrylate d'éthylène glycol, le diacrylate de diéthylèneglycol, le diacrylate d'éthylène glycol, le diallyl urée, le triallylamine, le triméthylol propanetriacrylate, l'acide diallyoxyacétique ou un de ses sels comme le diallyloxyacétate de sodium, ou un mélange de ces composés.

- le monomère de réticulation (AR) est du méthylène bis(acrylamide) ou du triallylamine ;
- le polyélectrolyte anionique réticulé de la phase aqueuse du latex inverse comprend pour 100% molaire :
   - une proportion entre 10% et 95%, plus particulièrement entre 20% et 90%, et encore plus particulièrement entre 32% et 80% massique de l'unité monomérique issue de l'acide 2-méthyl-2-[(1-oxo-2-propényl) amino] 1-propanesulfonique sous forme d'acide libre ou partiellement ou totalement salifiée ;
   - une proportion entre 5% et 90%, plus particulièrement entre 10% et 80%, et encore plus particulièrement entre 20% et 68% massique de l'unité monomérique issue d'au moins un monomère choisi parmi les éléments du groupe constitué par l'acrylate de (2-hydroxy éthyle), l'acrylate de (2,3-dihydroxy propyle), le méthacrylate de (2-hydroxy éthyle), le méthacrylate de (2,3-dihydroxypropyle), ou le vinyl pyrrolidone, et
   - une proportion supérieure à 0% molaire et inférieure ou égale à 1% molaire, plus particulièrement une proportion molaire inférieure ou égale à 0,5%, plus particulièrement inférieure ou égale à 0,25% et tout particulièrement inférieure ou égales à 0,1%, et plus particulièrement supérieure ou égales à 0,005% molaire d'unités monomériques issues d'au moins un monomère de réticulation (AR) polyéthylénique.
- la composition détergente comprend entre 0,1% et 10% massique, plus particulièrement entre 0,5% et 8% massique, et encore plus particulièrement entre 0,5% et 5% massique dudit latex inverse.

Au sens de la présente invention, par polyélectrolyte anionique réticulé (P), on désigne pour le polymère (P), un polyélectrolyte non linéaire qui se présente à l'état d'un réseau tridimensionnel insoluble dans l'eau, mais gonflable à l'eau et conduisant alors à l'obtention d'un gel chimique.

Au sens de la présente invention, le terme «salifié» indique que la fonction acide présente dans un monomère se trouve sous une forme anionique associée sous forme de sel à un cation, notamment les sels de métaux alcalins, tels que les cations du sodium ou du potassium, ou comme les cations de base azotés tels que le sel d'ammonium, le sel de lysine ou le sel de monoéthanolamine (HOCH2-CH2-NH3⁺). Il s'agit de préférence des sels de sodium ou d'ammonium.

Selon un aspect particulier de la présente invention, ledit latex inverse auto-inversible tel que défini ci-dessus comprend de 20% massique à 90% massique, et plus particulièrement de 30% massique à 90% massique, plus particulièrement de 30% massique à 80% massique, et encore plus particulièrement de 33% massique à 80% massique dudit polyélectrolyte anionique (P) réticulé.

Selon un autre aspect particulier de la présente invention, la proportion molaire en unités monomériques issues de acide 2-méthyl 2-[(1-oxo 2-propènyl) amino] 1-propanesulfonique sous forme acide libre ou partiellement ou totalement salifiée présentes dans ledit polyélectrolyte anionique réticulé (P) est supérieure ou égale à 32% molaire et inférieure ou égale à 100% molaire, plus particulièrement supérieure ou égale à 40% molaire et inférieure ou égale à 100% molaire.

Selon un aspect particulier de la présente invention, l'acide 2-méthyl 2-[(1-oxo 2-propènyl) amino] 1-propanesulfonique est sous forme de sel de de sodium ou d'ammonium.

La présente invention a également pour objet un procédé de préparation d'une composition détergente telle que définie précédemment, comprenant une étape de préparation du latex inverse comprenant les sous-étapes suivantes :
a) Préparation de la phase aqueuse telle que définie précédemment,
b) Préparation d'une phase organique comprenant au moins une huile (H) et un système tensioactif émulsionnant (S₁) de type eau-dans-huile,
c) Mélange de la phase aqueuse et de la phase organique préparées aux étapes a) et b) et émulsification de manière à former une émulsion,
d) Inertage de l'émulsion à l'azote,
e) Amorçage de la réaction de polymérisation par introduction dans l'émulsion inertée d'un initiateur de radicaux libres, et
f) Introduction dans le milieu réactionnel issu de l'étape e) d'un système tensioactif émulsionnant (S₂) de type huile-dans-eau à une température comprise entre 30 et 60°C.
Les étapes suivantes du procédé de préparation d'une composition détergente sont :
i. Préparation d'un milieu aqueux comprenant de l'eau, optionnellement un solvant, dans une cuve à double enveloppe dans laquelle circule un fluide caloporteur à une température régulée,
ii. Addition progressive du latex inverse auto-inversible obtenu à la sous-étape f) dans le milieu aqueux préparé lors de l'étape i) à une température modérée comprise entre 20°C et 60°C, sous agitation modérée non cisaillante, et
iii. Ajout d'au moins un agent tensioactif détergent dans le milieu résultant de l'étape ii)
iv. Ajout d'au moins un ingrédient auxiliaire optionnel

Selon le cas le procédé selon l'invention peut présenter une ou plusieurs des caractéristiques ci-dessous :
- à l'étape e) l'initiateur de radicaux est un couple oxydo-réducteur générateur d'ions hydrogénosulfite (HSO3-), tel que le couple hydroperoxyde de cumène - métabisulfite de sodium (Na2S2O5) ou le couple hydroperoxyde de cumène-chlorure de thionyle (SOCl2).
- à l'étape e) on introduit dans l'émulsion inertée un co-initiateur de polymérisation, de préférence de l'azo-bis(isobutyronitrile).
- à l'étape a) le pH de la phase aqueuse est ajusté entre 3,0 et 7,0 plus particulièrement entre 3,5 et 6,5, encore plus particulièrement entre 4,0 et 6,5
- le milieu réactionnel issu de l'étape e) est concentré par distillation avant la mise en œuvre de l'étape f).
- le milieu réactionnel issu de l'étape e) ou f) est séché par atomisation.

Par huile (H), on désigne dans la définition dudit latex inverse auto-inversible, notamment :
- Les alcanes linéaires comportant de onze à dix-neuf atomes de carbone ;
- Les alcanes ramifiés, comportant de sept à quarante atomes de carbone, comme l'isododécane, l'isopentadécane, l'isohexadécane, l'isoheptadécane, l'isooctadécane, l'isononadécane ou l'isoeicosane), ou des mélanges de certains d'entre eux comme ceux cités ci-après et identifiés par leur nom INCI : C₇₋₈ isoparaffin, C₈₋₉ isoparaffin, C₉₋₁₁ isoparaffin, C₉₋₁₂ isoparaffin, C₉₋₁₃ isoparaffin, C₉₋₁₄ isoparaffin, C₉₋₁₆ isoparaffin, C₁₀₋₁₁ isoparaffin, C₁₀₋₁₂ isoparaffin, C₁₀₋₁₃ isoparaffin, C₁₁₋₁₂ isoparaffin, C₁₁₋₁₃ isoparaffin, C₁₁₋₁₄ isoparaffin, C₁₂₋₁₄ isoparaffin, C₁₂₋₂₀ isoparaffin, C₁₃₋₁₄ isoparaffin, C₁₃₋₁₆ isoparaffin ;
- Les cyclo-alcanes optionnellement substitués par un ou plusieurs radicaux alkyles linéaires ou ramifies ;
- Les huiles blanches minérales, comme celles commercialisées sous les noms suivants : Marcol^{™}52, Marcol^{™}82, Drakeol^{™}6VR, Eolane^{™}130, Eolane^{™}150 ;
- L'hémisqualane (ou 2,6,10-trimethyl- dodécane ; numéro CAS : 3891-98-3), le squalane (ou 2,6,10,15,19,23-hexamethyltetracosane), le polyisobutène hydrogéné ou le polydécène hydrogéné ;
- Les mélanges d'alcanes comportant de 15 à 19 atomes de carbone, lesdits alcanes étant des alcanes linéaires, des alcanes ramifiés et des cyclo-alcanes, et plus particulièrement le mélange (M₁) qui comprend pour 100% de sa masse, une proportion massique en alcanes ramifiés supérieure ou égale à 90% et inférieure ou égale à 100% ; une proportion massique en alcanes linéaires supérieure ou égale à 0% et inférieure ou égale à 9%, et plus particulièrement inférieure à 5% et une proportion massique en cyclo-alcanes supérieure ou égale à 0% et inférieure ou égale à 1%, par exemple les mélanges commercialisés sous les noms Emogreen^{™}L15 ou Emogreen^{™}L19 ;
- Les éthers d'alcool gras de formule (IV) :

   - Z₁-O-Z₂ (IV),

   dans laquelle Z₁ et Z₂ identiques ou différents, représentent un radical alkyle linéaire ou ramifié comportant de cinq à dix-huit atomes de carbone, par exemple les dioctyl éther, didécyl éther, didodécyl éther, dodécyl octyl éther, dihexadécyl éther, (1,3-diméthyl butyl) tétradécyl éther, (1,3-diméthyl butyl) hexadécyl éther, le bis(1,3-diméthyl butyl) éther ou le dihexyl éther.
- Les mono-esters d'acides gras et d'alcools de formule (V) :

   - R'₁-(C=O)-O-R'₂ (V),

   dans laquelle R'₁-(C=O) représente un radical acyle, saturé ou insaturé, linéaire ou ramifié, comportant de huit à vingt-quatre atomes de carbone, et R'2 représente, indépendamment de R'₁, une chaîne hydrocarbonée saturée ou insaturée, linéaire ou ramifiée comportant de un à vingt-quatre atomes de carbone, par exemple les laurate de méthyle, laurate d'éthyle, laurate de propyle, laurate d'isopropyle, laurate de butyle, laurate de 2-butyle, laurate d'hexyle, cocoate de méthyle, cocoate d'éthyle, cocoate de propyle, cocoate d'isopropyle, cocoate de butyle, cocoate de 2-butyle, cocoate d'hexyle, myristate de méthyle, myristate d'éthyle, myristate de propyle, le myristate d'isopropyle, le myristate de butyle, le myristate de 2-butyle, le myristate d'hexyle, le myristate d'octyle, le palmitate de méthyle, le palmitate d'éthyle, le palmitate de propyle, le palmitate d'isopropyle, le palmitate de butyle, le palmitate de 2-butyle, le palmitate d'hexyle, le palmitate d'octyle, l'oléate de méthyle, l' oléate d'éthyle, l'oléate de propyle, l'oléate d'isopropyle, l'oléate de butyle, l'oléate de 2-butyle, l'oléate d'hexyle, l'oléate d'octyle, le stéarate de méthyle, le stéarate d'éthyle, le stéarate de propyle, le stéarate d'isopropyle, le stéarate de butyle, le stéarate de 2-butyle, le stéarate d'hexyle, le stéarate d'octyle, l'isostéarate de méthyle, l'isostéarate d'éthyle, l'isostéarate de propyle, l'isostéarate d'isopropyle, l'isostéarate de butyle, l'isostéarate de 2-butyle, l'isostéarate d'hexyle, l'isostéarate d'isostéaryle ;
- Les di-esters d'acides gras et de glycérol de formule (VI) et de formule (VII) :

   R'₃-(C=O)-O-CH₂-CH(OH)-CH₂-O-(C=O)-R'₄ (VI)

   R'₅-(C=O)-O-CH₂-CH[O-(C=O)-R'₆]-CH₂-OH (VII),

   formules (VI) (VII) dans lesquelles R'₃-(C=O), R'₄-(C=O), R'₅-(C=O), R'₆-(C=O), identiques ou différents, représentent un groupement acyle, saturé ou insaturé, linéaire ou ramifié, comportant de huit à vingt-quatre atomes de carbone ;
- Les tri-esters d'acides gras et de glycérol de formule (VIII) :

   R'₇-(C=O)-O-CH₂-CH[O-(C=O)-R"₈]-CH₂-O-(C=O)-R"₉ (VIII),

   dans laquelle R'₇-(C=O), R'₈-(C=O) et R'₉-(C=O), identiques ou différents, représentent un groupement acyle, saturé ou insaturé, linéaire ou ramifié, comportant de huit à vingt-quatre atomes de carbone.

Selon un autre aspect particulier de la présente invention, ladite huile (H) est choisie parmi l'undécane, le tridécane, l'isododécane ou l'isohexadécane, les mélanges d'alcanes et d'isoalcanes et de cycloalcanes comme le mélange (M₁) tel que défini précédemment et les mélanges commercialisés sous les noms Emogreen^{™}L15, Emogreen^{™}L19, Emosmart^{™}L15, Emosmart^{™}L19, Emosmart^{™}V21, Isopar^{™}L ou Isopar^{™}M ; les huiles blanches minérales commercialisées sous les noms Marcol^{™}52, Marcol^{™}82, Drakeol^{™}6VR, Eolane^{™}130 ou Eolane^{™}150 ; l'hémisqualane, le squalane, le polyisobutène hydrogéné ou le polydécène hydrogéné ; le dioctyl éther ou le didécyl éther ; le myristate d'isopropyle, le palmitate d'hexyle, le palmitate d'octyle, l'isostéarate d'isostéaryle, l'octanoyl/décanoyl triglycéride, l'hexadécanoyl/octadécanoyl triglycéride, les triglycérides issus de l'huile de colza, de l'huile de tournesol, de l'huile de lin ou de l'huile de palme.

Dans ledit latex inverse auto-inversible objet de la présente invention, le système tensioactif émulsionnant (S₁) de type eau-dans-huile est constitué soit d'un seul tensioactif émulsionnant soit d'un mélange de tensioactifs émulsionnants, à condition que ledit système émulsionnant (S₁) résultant ait une valeur de HLB suffisamment faible pour induire la formation d'émulsions de type eau-dans-huile.

Comme tensioactif émulsionnant (S₁) de type eau-dans-huile, il y a par exemple les esters d'anhydro hexitol et d'acides carboxyliques aliphatiques, linéaires ou ramifiés, saturés ou insaturés, comportant de 12 à 22 atomes de carbone éventuellement substitués avec un ou plusieurs groupes hydroxyles, et plus particulièrement les esters d'anhydro hexitol choisis parmi les anhydro-sorbitols et les anhydro-mannitols et d'acides carboxyliques aliphatiques, linéaires ou ramifiés, saturés ou insaturés, comportant de 12 à 22 atomes de carbone éventuellement substitués avec un ou plusieurs groupes hydroxyles.

Selon un autre aspect particulier de la présente invention, ledit système tensioactif émulsionnant (S₁) de type eau-dans-huile est choisi parmi les éléments du groupe constitué par le laurate de sorbitan, par exemple celui commercialisé sous le nom Montane^{™}20, le palmitate de sorbitan, par exemple celui commercialisé sous le nom Montane^{™}40, le stéarate de sorbitan, par exemple celui commercialisé sous le nom Montane^{™}60, l'oléate de sorbitan, par exemple celui commercialisé sous le nom Montane^{™}80, le sesquioléate de sorbitan, par exemple celui commercialisé sous le nom Montane^{™}85, le trioléate de sorbitan, par exemple celui commercialisé sous le nom Montane^{™}83, l'isolaurate de sorbitan, l'isostéarate de sorbitan, par exemple celui commercialisé sous le nom Montane^{™}70, le laurate de mannitan, l'oléate de mannitan, ou un mélange de ces esters ; les polyesters de poids moléculaire compris entre 1000 et 3000 et issus de la condensation entre un acide poly(isobutényl) succinique ou son anhydride, tels que

l'HYPERMER^{™} 2296, ou le mélange commercialisé sous le nom de marque SIMALINE^{™}IE 501 A, les polyhydroxystéarates de polyglycols de formule (IX) : 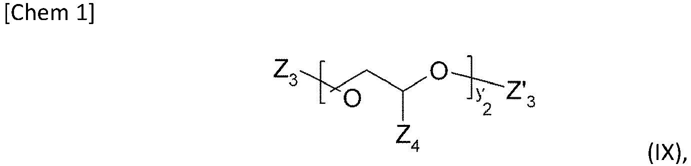 formule (IX) dans laquelle y₂ représente un nombre entier supérieur ou égal à 2 et inférieur ou égal à 50, Z₄ représente l'atome d'hydrogène, le radical méthyle, ou le radical éthyle, Z₃ représente un radical de formule (X) : 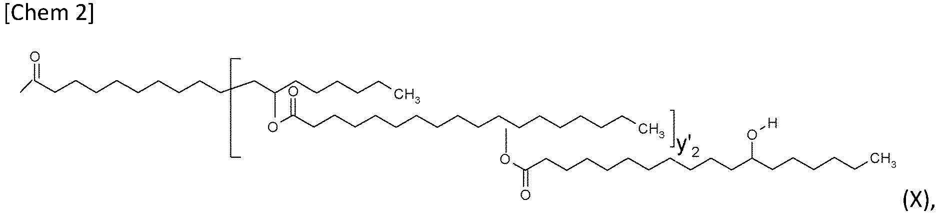 formule (X) dans laquelle y'₂ représente un nombre entier supérieur ou égal à 0 et inférieur ou égal à 10, plus particulièrement supérieur ou égal à 1 et inférieur ou égal à 10 et Z'₃ représente un radical de formule (X) telle que définie ci-dessus, avec Z₃' identique ou différent de Z₃, ou l'atome d'hydrogène.

Comme exemple de tensioactif émulsionnant de type eau-dans-huile de formule (IX) que l'on peut utiliser pour préparer le système émulsionnant (S₁), il y a le PEG-30 dipolyhydroxystéarate commercialisé sous le nom SIMALINE^{™} WO, ou bien les mélanges comprenant le PEG-30 dipolyhydroxystéarate et commercialisés sous les noms SIMALINE^{™}IE 201 A et SIMALINE^{™}IE 201 B, ou encore le mélange comprenant du Triméthylolpropane-30 tripolyhydroxystéarate commercialisé sous le nom SIMALINE^{™}IE 301 B.

Selon un aspect particulier de l'invention, le système émulsionnant de type huile-dans-eau (S₂) comprend pour 100% de sa masse une proportion supérieure ou égale à 50% massique et inférieure ou égal à 100% d'une composition (Ce) qui comprend pour 100% de sa masse :
- De 10% massique à 60% massique, plus particulièrement de 15% massique à 60% massique et tout particulièrement de 15% massique à 50% d'au moins un composé de formule (I) :

   HO-[CH₂-CH(OH)-CH₂-O]ₙ-H (I)

   dans laquelle n représente un nombre entier supérieur ou égal à un et inférieur ou égal à quinze ;
- De 40% massique à 90 % massique, plus particulièrement de 40% massique à 85 % massique et tout particulièrement de 50% massique à 85% massique d'au moins un composé de formule (II) :

   R₁-(C=O)-[O-CH₂-CH(OH)-CH₂]ₚ-OH (II),

   dans laquelle p, différent ou identique à n, représente un nombre entier supérieur ou égal à un et inférieur ou égal à quinze ; et dans laquelle le groupe R₁-(C=O)- représente un radical aliphatique saturé ou insaturé, linéaire ou ramifié, comportant de six à vingt-deux atomes de carbone, et optionnellement
- Jusqu'à 30% massique, plus particulièrement de 0% massique à 25% massique et tout particulièrement de 0% massique à 20% massique d'au moins une composition (C₁₁) représentée par la formule (III) :

   HO-[CH₂-CHOH-CH₂-O-]_{q}-(G)ᵣ-H (III),

   dans laquelle q différent ou identique à n, représente un nombre entier supérieur ou égal à un et inférieur ou égal à 3, G représente le reste d'un sucre réducteur et r représente un nombre décimal supérieur ou égal à 1,05 et inférieur ou égal à 5,00,
   ladite composition (C₁₁) consistant en un mélange des composés de formules (III₁), (III₂), (III₃), (III₄) et (III₅) :

   HO-[CH₂-CHOH-CH₂-O-]_{q} -O-(G)₁-H (III₁),

   HO-[CH₂-CHOH-CH₂-O-]_{q} -O-(G)₂-H (III₂),

   HO-[CH₂-CHOH-CH₂-O-]_{q} -O-(G)₃-H (III₃),

   HO-[CH₂-CHOH-CH₂-O-]_{q} -O-(G)₄-H (III₄),

   HO-[CH₂-CHOH-CH₂-O-]_{q} -O-(G)₅-H (III₅),

   en des proportions molaires en dits composés de formules (III₁), (III₂), (III₃), (III₄) et (III₅) respectivement égales à a₁, a₂, a₃, a₄ et as, telles que la somme (a₁+ a₂ + a₃ + a₄ + as) est égale à un, et que la somme (a₁ + 2a₂ + 3a₃ + 4a₄ + 5as) est égale à r.

Le système émulsionnant (S2) de type huile-dans-eau est constitué soit de la seule composition (Ce), soit d'un mélange de ladite composition (Ce) avec un ou plusieurs autres tensioactifs émulsionnants, à condition que ledit système émulsionnant (S2) résultant ait une valeur de HLB suffisamment élevée pour induire la formation d'émulsions de type huile-dans-eau.

Par sucre réducteur, on désigne dans la formule (III) telle que définie précédemment, les dérivés saccharidiques qui ne présentent pas dans leurs structures de liaison glycosidique établie entre un carbone anomérique et l'oxygène d'un groupement acétal tels qu'ils sont définis dans l'ouvrage de référence : "Biochemistry", Daniel Voet/Judith G. Voet, p. 250, John Wyley & Sons, 1990. La structure oligomérique (G)x peut se présenter sous toutes formes d'isoméries, qu'il s'agisse d'isomérie optique, d'isomérie géométrique ou d'isomérie de position ; elle peut aussi représenter un mélange d'isomères.

Concernant la réaction de polymérisation, celle-ci est amorcée à l'étape e) à une température préférentielle de 10°C, puis conduite soit de manière quasi adiabatique jusqu'à une température supérieure ou égale à 60° C, soit en contrôlant la température.

L'invention a aussi pour objet l'utilisation dudit latex inverse auto-inversible tel que défini précédemment, comme agent épaississant et/ou émulsionnant et/ou stabilisant d'une composition aqueuse liquide détergente à usage ménager ou industriel.

Selon un aspect particulier, ladite utilisation consiste à épaissir des phases polaires comme par exemple les phases aqueuses, alcooliques ou hydro-alcooliques ou les phases polaires comprenant des polyols tels que le glycérol.

Selon un autre aspect particulier, ladite utilisation consiste à stabiliser une émulsion de type huile-dans-eau, ou de type eau-dans-huile, en conférant un aspect homogène à ladite émulsion pendant le stockage dans différentes conditions, et plus particulièrement à 25°C pendant une durée au moins égale à un mois, et plus particulièrement à 4°C pendant une durée au moins égale à un mois, et plus particulièrement à 45°C pendant une durée au moins égale à un mois.

Selon un autre aspect particulier, ladite utilisation consiste à stabiliser des particules solides dans des compositions aqueuses liquides détergentes à usage ménager ou industriel.

Ces particules solides à suspendre peuvent revêtir différentes géométries, régulières ou irrégulières, et se présenter sous forme de perles, de billes, de tiges, de paillettes, de lamelles ou de polyèdres. Ces particules solides se caractérisent par un diamètre moyen apparent compris entre un micromètre et cinq millimètres, plus particulièrement entre dix micromètres et un millimètre.

Parmi les particules solides qui peuvent être mises en suspension et stabilisées par le latex inverse auto-inversible telle que définie précédemment dans des compositions aqueuses liquides détergentes à usage ménager ou industriel, il y a les micas, l'oxyde de fer, l'oxyde de titane, l'oxyde de zinc, l'oxyde d'aluminium, le talc, la silice, le kaolin, les argiles, le nitrure de bore, le carbonate de calcium, le carbonate de magnésium, l'hydrogénocarbonate de magnésium, les pigments colorés inorganiques, les polyamides comme le nylon-6, les polyéthylènes, les polypropylènes, les polystyrènes, les polyesters, les polymères acryliques ou méthacryliques comme les polyméthylméthacrylates, le polytétrafluoroéthylène, les cires cristallines ou microcristallines, des sphères poreuses, le sulphide de sélénium, le pyrithione de zinc, les amidons, les alginates, les fibres de végétaux, les particules de Loofah, les particules d'éponges.

Ladite composition aqueuse liquide détergente (F), objet de la présente invention se présente notamment sous la forme d'une solution aqueuse, d'une émulsion ou d'une microémulsion à phase continue aqueuse, d'une émulsion ou d'une microémulsion à phase continue huileuse, d'un gel aqueux, d'une mousse, ou encore sous la forme d'un aérosol. Elle peut être appliquée directement partrempage, par aspersion ou par vaporisation sur la surface à nettoyer ou bien par l'intermédiaire de tout type de support destiné à être mis en contact avec la surface solide à nettoyer (papier, lingette, textile).

De façon générale ladite composition aqueuse liquide détergente (F) objet de la présente invention, comporte également des ingrédients habituellement mis en œuvre dans le domaine du nettoyage de surfaces solides ou de fibres textiles, comme les tensioactifs non-ioniques, cationiques ou amphotères, des polymères cationiques ou non-ioniques, des agents épaississants, des enzymes, des agents de blanchiment, des agents anticorrosion, des solvants, des agents acides, des agents alcalins, des agents anticalcaire, des agents conservateurs, des parfums, des colorants, des agents répulsifs, des agents oxydants, des adjuvants de détergence, des agents antisalissure, les agents anti-redéposition.

Parmi les agents tensioactifs détergents susceptibles d'être utilisés pour la préparation de la composition aqueuse liquide détergente (F) telle que définie précédemment, on peut citer des agents tensioactifs qui confèrent à la composition aqueuse liquide détergente (F) leur capacité à éliminer les salissures présentes sur les surfaces solides et à les maintenir en suspension, pour être ensuite éliminées lors de l'étape de rinçage.

Ces agents tensioactifs détergents peuvent être de nature anionique, cationique, amphotère ou non-ionique.

Parmi les agents tensioactifs anioniques détergents susceptibles d'être utilisés pour la préparation de la composition aqueuse liquide détergente (F) telle que définie précédemment, on peut citer les sels de métaux alcalins, les sels de métaux alcalino-terreux, les sels d'ammonium, les sels d'amines, les sels d'amino alcools d'alkyléthers sulfates, d'alkyl sulfates, d'alkylamidoéther sulfates, d'alkylarylpolyéther sulfates, de monoglycérides sulfates, d'alpha-oléfinesulfonates, de paraffines sulfonates, d'alkyl phosphates, d'alkyléther phosphates, d'alkyl sulfonates, d'alkylamide sulfonates, d'alkylaryl sulfonates, d'alkyl carboxylates, d'alkylsulfosuccinates, d'alkyléther sulfosuccinates, d'alkylamide sulfosuccinates, d'alkyl sulfo-acétates, d'alkyl sarcosinates, d'acyliséthionates, de N-acyl taurates, d'acyl lactylates, de dérivés N-acylés d'acides aminés, de dérivés N-acylés de peptides, de dérivés N-acylés de protéines, d'acides gras.

Parmi les tensioactifs amphotères détergents susceptibles d'être utilisés pour la préparation de la composition aqueuse liquide détergente (F) telle que définie précédemment, on peut citer les alkylbétaines, les alkylamidobétaines, les sultaines, les alkylamidoalkylsulfobétaines, les dérivés d'imidazolines, les phosphobétaïnes, les amphopolyacétates et les amphopropionates.

Parmi les tensioactifs cationiques détergents susceptibles d'être utilisés pour la préparation de la composition aqueuse liquide détergente (F) telle que définie précédemment, on peut citer particulièrement les dérivés d'ammoniums quaternaires.

Parmi les tensioactifs non ioniques détergents susceptibles d'être utilisés pour la préparation de la composition aqueuse liquide détergente (F) telle que définie précédemment, on peut citer particulièrement les alkylpolyglycosides comportant un radical aliphatique, linéaire ou ramifié, saturé ou insaturé, et comportant de 8 à 16 atomes de carbone ; les dérivés d'huile de ricin, les polysorbates, les amides de coprah, les N-alkylamines.

Parmi les acides minéraux particulièrement choisis comme agents acides dans ladite composition aqueuse liquide détergente (F), on peut citer l'acide chlorhydrique, l'acide nitrique, l'acide phosphorique, l'acide sulfurique, l'acide hypophosphoreux, l'acide phosphoreux, l'acide hypochloreux, l'acide perchlorique, l'acide carbonique, l'acide borique, l'acide manganique, l'acide permanganique, l'acide chromique, l'acide périodique, l'acide iodique, l'acide hypoiodeux, l'acide bromohydrique, l'acide iodhydrique, l'acide fluorhydrique.

Parmi les acides organiques particulièrement choisis comme agents acides dans ladite composition aqueuse liquide détergente (F), on peut citer l'acide formique, l'acide acétique, l'acide propionique, l'acide benzoïque, l'acide salicylique, l'acide oxalique, l'acide malonique, l'acide succinique, l'acide glutarique, l'acide adipique, l'acide glycolique, l'acide lactique, l'acide malique, l'acide maléique, l'acide tartrique, l'acide citrique, l'acide sorbique, l'acide sulfamique, l'acide dihydroacétique, l'acide diméthylsulfamique, l'acide fumarique, l'acide glutamique, l'acide isopropyl sulfamique, l'acide valérique, l'acide benzène sulfonique, l'acide xylène sulfonique, l'acide 2-éthyl-hexanoïque, l'acide caprique, l'acide caproïque, l'acide crésylique, l'acide dodécylbenzène sulfonique, l'acide peracétique, l'acide monochloroacétique, l'acide gluconique.

Parmi les agents alcalins associés au dit latex inverse auto-inversible tel que défini précédemment dans ladite composition aqueuse liquide détergente (F), on peut citer les éléments du groupe constitué par les hydroxydes de métaux alcalins ou alcalino-terreux comme par exemple l'hydroxyde de sodium, l'hydroxyde de potassium, l'hydroxyde de barium et l'hydroxyde de calcium.

Parmi les agents anti-calcaires associés au dit latex inverse auto-inversible tel que défini précédemment dans ladite composition aqueuse liquide détergente (F), on peut citer les éléments du groupe constitué par les agents séquestrants, comme par exemple le tripolyphospate de sodium (TPP), l'éthylènediaminetétracétate (EDTA), le tetraacetyléthylènediamine (TAED), le méthyl glycine diacétate (MGDA), le nitrolotriacétate de sodium (Na3NTA), les gluconates de sodium ou de potassium, les érythorbates de sodium ou de potassium, les polycarboxylates de sodium ou de potassium, et le citrate de sodium, par les agents échangeurs d'ions comme par exemple les zéolithes ou aluminosilicates de sodium, ou les silicates de sodium lamellaires, les agents précipitants comme par exemple le carbonate de calcium et le métasilicate de sodium.

Les agents séquestrants, et plus particulièrement les agents séquestrants décrits ci-dessus, ont pour effet de complexer les ions calcium et magnésium pour former des complexes hydrosolubles ensuite éliminés pendant le rinçage. Les agents échangeurs d'ions, et plus particulièrement les agents échangeurs d'ions décrits ci-dessus, ont pour effet d'échanger leurs ions sodium avec des ions calcium et magnésium. Les agents précipitants, et plus particulièrement les agents séquestrants décrits ci-dessus, ont pour effet d'éliminer les ions responsables de la solideté de l'eau en formant des composés de calcium insolubles, éliminé par la suite avec les salissures sur les surfaces nettoyées.

Selon un aspect plus particulier, dans ladite composition aqueuse liquide détergente (F), l'agent anticalcaire est choisi parmi les éléments du groupe constitué du métasilicate de sodium, du tripolyphospate de sodium (TPP), de l'éthylènediaminetétracétate (EDTA), du tetraacetyléthylènediamine (TAED), du méthyl glycine diacétate (MGDA), du nitrolotriacétate de sodium (Na3NTA), du gluconate de sodium, du citrate de sodium et du carbonate de calcium.

Parmi les tensioactifs non-ioniques que l'on peut associer au dit latex inverse auto-inversible tel que défini précédemment dans ladite composition aqueuse liquide détergente (F), on peut citer :
- Des copolymères blocs d'oxyde d'éthylène et d'oxyde de propylène, et tout particulièrement les copolymères blocs d'oxyde d'éthylène et d'oxyde de propylène commercialisés sous le nom de marque PLURONIC^{™} par la société BASF, comme par exemple le PLURONIC^{™}PE 6100 et le PLURONIC^{™}PE 6200,
- Des tensioactifs non ioniques démoussants de formule (A₁) :

   R₁-X-[(CH₂-CH(CH₃)-O)_{u'}-(CH₂-CH₂-O)_{v'}-Y]_{w'} (A₁)

   dans laquelle R₁ représente un radical aliphatique hydrocarboné, saturé ou insaturé, linéaire ou ramifié, comportant de 6 à 18 atomes de carbone, X représente un atome d'azote ou un atome d'oxygène, u' et v', identiques ou différents, représentent chacun un nombre entier compris entre 1 et 50, w' est soit égal à 1 si X représente un atome d'oxygène, soit égal à 1 ou à 2 si X représente un atome d'azote, et Y représente un groupe fonctionnel bloquant choisi parmi les éléments du groupe constitué par les radicaux alkyles linéaires comportant de 4 à 8 atomes de carbone, comme le radical butyle, le radical benzyle, un groupe oxyde de butylène. Parmi les tensioactifs non ioniques démoussants de formule (A₁), on peut citer les produits commercialisés sous le nom de marque TERGITOL^{™} par la société DOW CHEMICAL comme par exemple le TERGITOL^{™} L61E et le TERGITOL^{™} L64E
- Des tensioactifs non ioniques peu moussant de formule (A₂) :

   R₈-O-(S')_{q'}-H (A₂)

   dans laquelle S'représente le reste d'un sucre réducteur choisis parmi les éléments du groupe constitué par le glucose, le xylose et l'arabinose, R₈ représente un radical hydrocarboné saturé, linéaire ou ramifié, comportant de 6 à 10 atomes de carbone et q' représente un nombre décimal supérieur ou égal à 1,05 et inférieur ou égal à 5.

Comme exemple de tensioactifs non ioniques peu moussants de formule (A₂) optionnellement présents dans ladite composition aqueuse liquide détergente (F), on peut citer les hexylpolyglucosides, les 2-éthyl hexyl polyglucosides, les n-heptyl polyglucosides ou les n-octyl polyglucosides.

Parmi les tensioactifs amphotères moussants et/ou détergents que l'on peut associer au dit latex inverse auto-inversible tel que défini précédemment dans ladite composition aqueuse liquide détergente (F), on peut citer les alkylbétaïnes, les alkylamidobétaïnes, les sultaïnes, les alkylamidoalkylsulfobétaïnes, les dérivés d'imidazolines, les phosphobétaïnes, les amphopolyacétates, les amphopropionates, le β alanine, N-(2-carboxyethyl)-N(2-ethylhexyl) de sodium commercialisé sous le nom de marque TOMAMINE^{®} 30 AMPHOTERIC 400 SURFACTANT.

Parmi les tensioactifs non ioniques que l'on peut associer au dit latex inverse auto-inversible tel que défini précédemment dans ladite composition aqueuse liquide détergente (F), on peut citer les monoglycérides alcoxylés, les diglycérides alcoxylés, les hydrocarbures terpéniques alcoxylés tels que les α- ou β-pinènes éthoxylés et/ou propoxylés, contenant de 1 à 30 motifs oxyéthylène et/ou oxypropylène, les produits résultant de la condensation de l'oxyde d'éthylène ou de l'oxyde de propylène avec l'éthylènediamine, tels les TETRONIC^{™} commercialisés par BASF, les acides gras éthoxylés et/ou propoxylés en C8-C18 contenant de 5 à 25 moles d'oxyde d'éthylène et/ou de propylène, les amides gras éthoxylés contenant de 5 à 30 moles d'oxyde d'éthylène, les aminés éthoxylées contenant de 5 à 30 moles d'oxyde d'éthylène, les amidoamines alcoxylées contenant de 1 à 50, de préférence de I à 25, tout particulièrement de 2 à 20 moles d'oxyde d'éthylène et/ou de propylène.

Parmi les agents épaississants et/ou gélifiants que l'on peut associer au dit latex inverse auto-inversible tel que défini précédemment dans ladite composition aqueuse liquide détergente (F), on peut citer les polysaccharides constitués uniquement d'osés, comme les glucanes ou homopolymères du glucose, les glucomannoglucanes, les xyloglycanes, les galactomannanes dont le degré de substitution (DS) des unités de D-galactose sur la chaîne principale de D-mannose est compris entre 0 et 1, et plus particulièrement entre 1 et 0,25, comme les galactomannanes provenant de la gomme de cassia (DS = 1/5), de la gomme de caroube (DS = 1/4), de la gomme de tara (DS = 1/3), de la gomme de guar (DS = 1/2), 25 de la gomme de fenugrec (DS = 1).

Parmi les agents épaississants et/ou gélifiants que l'on peut associer au dit latex inverse auto-inversible tel que défini précédemment dans ladite composition aqueuse liquide détergente (F), on peut citer les polysaccharides constitués de dérivés d'osés, comme les galactanes sulfatés et plus particulièrement les carraghénanes et l'agar, les uronanes et plus particulièrement les algines, les alginates et les pectines, les hétéropolymères d'oses et d'acides uroniques et plus particulièrement la gomme xanthane, la gomme gellane, les exsudats de gomme de arabique et de gomme de karaya, les glucosaminoglycanes. Parmi les agents épaississants et/ou gélifiants que l'on peut associer au dit latex inverse auto-inversible tel que défini précédemment dans ladite composition aqueuse liquide détergente (F), on peut citer la cellulose, les dérivés de cellulose comme la méthyl-cellulose, l'éthyl-cellulose, l'hydroxypropyl cellulose, les silicates, l'amidon, les dérivés hydrophiles de l'amidon, les polyuréthanes.

Parmi les agents épaississants et/ou gélifiants que l'on peut associer au dit latex inverse auto-inversible tel que défini précédemment dans ladite composition aqueuse liquide détergente (F), on peut citer les agents épaississants inorganiques comme par exemple les argiles, l'hectorite, la saponite, la sauconite, la vermiculite ou la silice colloïdale.

Les agents épaississants présents dans la composition (F) objet de la présente invention sont utilisés dans des quantités comprises entre 0,1% et 10% massique. Parmi les agents abrasifs que l'on peut associer au dit latex inverse auto-inversible tel que défini précédemment dans ladite composition aqueuse liquide détergente (F), on peut citer des matériaux d'origine naturelle comme par exemple des copeaux de bois ou de noyaux, des matériaux abrasifs inorganiques tels que des oxydes, des quartzs, des terres diatomées, des dioxydes de silice colloïdales, des matériaux abrasifs organiques tels que des polyoléfines comme les polyéthylènes et les polypropylènes, des polystyrènes, des résines d'acétonitrile-butadiènestyrène, des mélamines, des résines phénoliques, des résines époxy, des résines polyuréthanes.

Les agents abrasifs présents dans la composition (F) objet de la présente invention sont utilisés dans des quantités comprises entre 5,0% et 30% massique.

Parmi les solvants que l'on peut associer au dit latex inverse auto-inversible tel que défini précédemment dans ladite composition aqueuse liquide détergente (F), on peut citer l'alcool isopropylique, l'alcool benzylique, le 1,3-propanediol, les solvants chlorés, l'acétone, le méthyl éthyl éther, le méthyl isobutyl éther, l'acétate de butyle, l'acétate d'éthyle, l'acétate d'isopropyle, l'acétate d'isobutyle, les solvants aromatiques, les isoparaffines, l'isododécane, le lactate d'éthyle, le lactate de butyle, les solvants terpéniques, les esters méthyliques de colza, les esters méthyliques de tournesol, le propylèneglycol n-méthyl éther, le dipropylène glycol n-méthyl éther, le tripropylène glycol n-méthyl éther, le propylène glycol n-butyl éther, le dipropylène glycol n-butyl éther, le tripropylène glycol n-butyl éther, le propylène glycol n-propyl éther, le dipropylène glycol n-propyl éther, le propylène glycol mono méthyl éther acétate, le propylène glycol di acétate, le propylène glycol phényl éther, l'éthylène glycol phényl éther, le dipropylène glycol diméthyl éther.

Comme exemples de solvants présents dans la composition (F) objet de la présente invention, on peut citer plus particulièrement les éléments du groupe constitué par le propylène glycol n-méthyl éther, le dipropylène glycol n-méthyl éther, le tripropylène glycol n-méthyl éther, le propylène glycol n-butyl éther, le dipropylène glycol n-butyl éther, le tripropylène glycol n-butyl éther, le propylène glycol n-propyl éther, le dipropylène glycol n-propyl éther, le propylène glycol phényl éther, l'éthylène glycol phényl éther, le dipropylène glycol diméthyl éther, les esters méthyliques de colza, les esters méthyliques de tournesol.

Parmi les enzymes que l'on peut associer au dit latex inverse auto-inversible tel que défini précédemment dans ladite composition aqueuse liquide détergente (F), on peut citer les protéases, les amylases, les lipases, les cellulases et les peroxydases.

Les enzymes présentes dans la composition (F) objet de la présente invention sont utilisés dans des quantités comprises entre 0,005 % et 0,5 % massique.

Selon un autre aspect, l'invention a pour objet l'utilisation de ladite composition aqueuse liquide détergente (F) telle que définie précédemment, pour nettoyer les surfaces solides. L'expression « pour nettoyer les surfaces solides » désigne toute action destinée à permettre l'élimination de salissures présentes sur des surfaces constituées de matériaux divers.

Les surfaces à nettoyer peuvent être des surfaces solides ou des surfaces textiles. Par surfaces solides, on désigne par exemple les sols, les murs, les carreaux de fenêtres, les carrelages, les appareils électro-ménagers, la vaisselle, les plans de travail, la robinetterie, les éviers, des cuves de stockage de produits chimiques, alimentaires ou agricoles, les véhicules (automobiles, moto, camions, ...). Les matériaux constituant ces surfaces solides sont par exemple le verre (sodocalcique, fluorocalcique, borosilicate, cristal), la porcelaine, la faïence, la céramique, les plastiques polycarbonates, polypropylènes, l'acier inoxydable, l'argent, le cuivre, l'aluminium, le bois, les résines synthétiques, la vitrocéramique, le linoleum, et peuvent être revêtus de peintures, de vernis. Comme exemple de salissures présentes sur ces surfaces solides et à éliminer par nettoyage, on peut citer par exemple des résidus alimentaires, des graisses, des hydrocarbures lourds et légers, des résidus brûlés, de la poussière, de la boue, des traces de doigts, des résidus de savon, des germes.

Selon un autre aspect, l'invention a pour objet un procédé de nettoyage d'une surface solide, caractérisé en ce qu'il comprend au moins une première étape a"1) d'application de ladite composition détergente (F) telle que définie précédemment, suivie d'au moins une étape b"1) de rinçage de ladite surface solide.

Dans l'étape a"1) du procédé tel que défini ci-dessus, ladite composition aqueuse liquide détergente (F) est appliquée sur la surface comprenant les salissures à nettoyer par tout moyen, par exemple en plein bain, par aspersion ou par application par l'intermédiaire d'un support constitué de fibres textiles synthétiques ou naturelles, tissées ou non tissées, ou de papier, préalablement imprégné de celle-ci.

Dans l'étape b"1) du procédé tel que défini ci-dessus, le rinçage de la surface solide sur laquelle a été appliquée la composition (F) à usage ménager ou industriel lors de l'étape a"1) est réalisé en plein bain ou par aspersion d'eau. L'étape b"1) du procédé de nettoyage objet de l'invention, peut être réalisée à température ambiante ou à une température comprise entre 30°C et 80°C, plus particulièrement à une température comprise entre 30°C et 65°C.

Les exemples suivants illustrent l'invention, sans toutefois la limiter.

### 1- Exemples

### 1.1 Préparation d'un latex inverse (LI₁) comprenant un copolymère réticulé du sel de sodium de l'acide 2-méthyl-[(1-oxo-2-propenyl)amino] 1-propanesulfonique et du hydroxyéthyl acrylate contenant l'éthylènediamine disuccinique acide sous forme de sel trisodique comme agent séquestrant.

On charge dans un bécher sous agitation :
- 632,5 d'une solution commerciale à 55% de sel de sodium de l'acide 2-méthyl- [(1-oxo-2-propenyl)amino] 1-propanesulfonique
- 19,6 g d'hydroxyethylacrylate
- 0,143 g de méthylène bis-acrylamide
- 0,62 g d'une solution commerciale d'ethylenediamine disuccinique acide sous forme de sel trisodique (commercialisé sous le nom de marque Natriquest^{™}E30).
- 0,1 grammes de sulfate de cuivre pentahydraté.

Le pH de la phase aqueuse est ajusté à 4,0. La phase aqueuse est complétée jusqu'à 660g.

La phase organique est préparée en parallèle en mélangeant :
- 240 grammes d'isohéxadécance
- 21 grammes Montane^{™} 70⁽¹⁾

### (1) : Montane^{™}70 est un isostéarate de sorbitan, tensioactif de type eau-dans-huile, commercialisé par la société SEPPIC

La phase aqueuse préparée ci-dessus est ajoutée progressivement sur la phase huileuse puis dispersée à l'aide d'un rotor stator type Ultra Turrax^{™} commercialisé par la société Ika^{™}.

L'émulsion obtenue est ensuite transférée dans un réacteur double-enveloppé, et soumise à un barbotage d'azote pour éliminer l'oxygène. Une solution à 0,64% en poids d'hydroperoxyde de cumène dans isohéxadécane est introduite et l'émulsion est maintenue sous agitation pendant 5 minutes d'homogénéisation à température ambiante.

La réaction de polymérisation est initiée à l'aide du couple d'oxydoréducteurs: hydroperoxyde de cumène/métabisulfide de sodium. Une fois la réaction de polymérisation terminée, le milieu réactionnel est chauffé à 85°C pendant 1h puis l'ensemble est refroidi jusqu'à environ 35°C, ensuite 33.7 g de Montanox^{™} 60⁽²⁾ sont ajouté sur la préparation.

L'essai est référencé (LI₁) et ses caractéristiques sont présentées dans le tableau 4.

### (2) : Montanox^{™}60 est un stéarate de sorbitan polyéthoxylé, tensioactif de type huile-dans-eau, commercialisé par la société SEPPIC.

### 1.2 Préparation d'un latex inverse (LI₂) comprenant un copolymère réticulé du sel de sodium de l'acide 2-méthyl-[(1-oxo-2-propenyl)amino] 1-propanesulfonique et du hydroxyéthyl acrylate contenant le diéthylènetriamine pentaacétate de sodium comme agent séquestrant.

Le même protocole que l'exemple 1.1 est mis en oeuvre mais les 0,62 g d'une solution commerciale d'ethylenediamine disuccinique acide sous forme de sel trisodique sont substitués par 0.45 g d'une solution de diéthylènetriamine pentaacétate de sodium (commercialisé sous le nom de marque Versenex^{™} 80).

Le produit est référencé **(LI₂).**

### 1.3 Préparation d'un latex inverse (LI₃) comprenant un copolymère réticulé du sel de sodium de l'acide 2-méthyl-[(1-oxo-2-propenyl)amino] 1-propanesulfonique et du hydroxyéthyl acrylate contenant le sel tétrasodique du glutamique acid, N,N-diacetic comme agent séquestrant.

Le même protocole que l'exemple 1.1 est mis en œuvre mais les 0,62 g d'une solution commerciale d'éthylènediamine disuccinique acide sous forme de sel trisodique sont substitués par 0.62 g d'une solution du sel tetrasodique du glutamique acid, N,N-diacetic (commercialisé sous le nom de marque Dissolvine^{™} GLDA 47-S).

Le produit est référencé **(LI₃).**

### 1.4 Préparation d'un latex inverse (LI₄) comprenant un copolymère réticulé du sel de sodium de l'acide 2-méthyl-[(1-oxo-2-propenyl)amino] 1-propanesulfonique et du hydroxyéthyl acrylate contenant le sel de sodium de l'acid Iminodisuccinique comme agent séquestrant.

Le même protocole que l'exemple 1.1 est mis en oeuvre mais les 0,62 g d'une solution commerciale d'éthylènediamine disuccinique acide sous forme de sel trisodique sont substitués par 0.62 g d'une solution du sel de sodium de l'acid Iminodisuccinique (commercialisé sous le nom de marque Baypure^{™} CX100).

Le produit est référencé **(LI₄).**

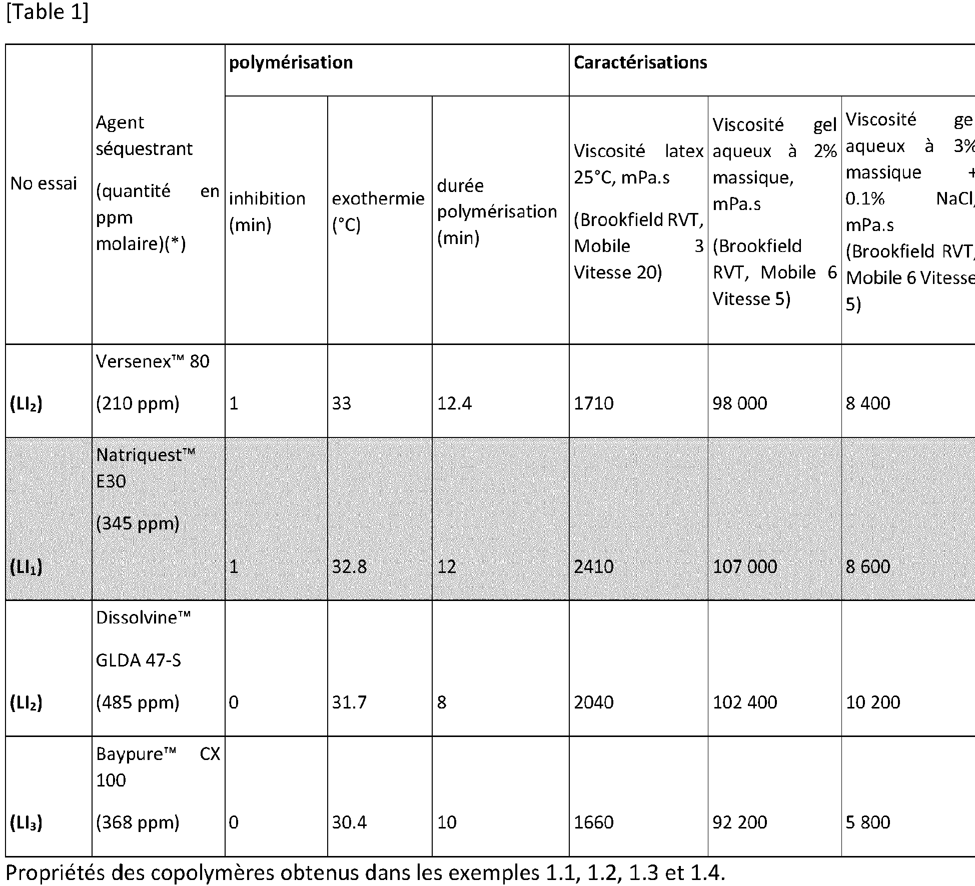

En conclusion, les essais de copolymérisation de l'acide 2-méthyl-[(1-oxo-2-propenyl)amino] 1-propanesulfonique et de l'acrylate de 2-hydroxyéthyle par polymérisation radicalaire en émulsion inverse montrent qu'en présence de cations de cuivre, les différents agents chélatants testés présentent une efficacité similaire. Dans chacun des exemples, la polymérisation présente des caractéristiques semblables: durée d'inhibition, de polymérisation et exothermie. Les latex inverses auto-inversibles obtenus dans ces conditions possèdent des propriétés épaississantes équivalentes dans l'eau et en présence d'électrolytes.

### Il : Formulations détergentes illustratives

Dans les formulations suivantes, les pourcentages sont exprimés en pourcentage massique pour 100% de la masse de la formulation.

### II_{A} - Composition nettoyante pour fours et grilles de cuissons

| Ingrédients | | Teneur massique |
|---|---|---|
| SIMULSOL^{™}OX1309L⁽¹⁾ | | 2% |
| SIMULSOL^{™}SL7G⁽²⁾ | | 2% |
| Composition (LI₆) | | 6% |
| Hydroxyde de sodium : | | 25% |
| Eau : | qs 100% | |

| | | |
|---|---|---|
| (1) : SIMULSOL^{™} OX1309L : composition tensioactive détergente commercialisée par la société SEPPIC, comprenant des alcools polyéthoxylés résultant de la réaction d'un équivalent molaire d'un alcool commercialisé sous le nom de marque EXXAL^{™}13 avec 9 équivalents molaires d'oxyde d'éthylène. (2) : SIMULSOL^{™}SL7G : solution de n-heptyl polyglucosides, agent hydrotrope et solulbilisant commercialisé par la société SEPPIC. | | |

### Préparation

a) Un pré-gel est préparé à 20°C par l'addition du SIMULSOL^{™}OX1309L, puis de le SIMULSOL^{™}SL7G dans l'eau. La composition (LI₆) selon l'invention est ensuite introduite dans la solution aqueuse et mélangée jusqu'à l'obtention d'un gel de viscosité stable.
b) La soude est ensuite introduit progressivement sous agitation mécanique à une température de 20°C jusqu'à l'obtention d'un gel homogène. Le gel obtenu à l'issue de l'étape b) est d'un aspect homogène et limpide, de viscosité 10.000 mPa.s (Brookfield LVT à une vitesse de 6 tours/minute). Après une période de stockage de 6 mois à 25°C, le gel obtenu à l'issue de l'étape b) de ce mode opératoire présente un aspect homogène et limpide, de viscosité 12.000 mPa.s (Brookfield LVT, à une vitesse de 6 tours/minute).

### Procédé de nettoyage

La composition préparée ci-dessus est pulvérisée à température ambiante sur les parois d'un four souillé par des graisses alimentaires et sur les grilles de cuissons également souillées par des graisses alimentaires. Après dix minutes, les parois du four et les grilles de cuisson sont rincées à l'aide d'eau chaude à 60°C. Les parois du four et la surfaces des grilles de cuisson ainsi nettoyé ne présentent plus de salissures.

### II_{B} - Nettoyant pour surfaces en aluminium

| Ingrédients | | Teneur massique |
|---|---|---|
| SIMULSOL^{™}OX1309L | | 3% |
| SIMULSOL^{™}SL7G | | 3% |
| Composition (LI₆) | | 5% |
| Acide phosphorique à 75% | | 40% |
| HORDAPHOS⁽³⁾ MDGB 1% | | 5% |
| Dipropylèneglycol méthyl éther | 5% | |
| Eau : | qs 100% | |

| | | |
|---|---|---|
| (3) : HORDAPHOS^{™} MDGB est une composition à base d'esters phosphoriques, utilisée comme agent anti-corrosion. | | |

### Préparation

Chaque ingrédient est introduit successivement dans une cuve de mélange sous agitation mécanique modérée, à température ambiante, jusqu'à l'obtention d'une composition homogène et limpide. L'agitation est maintenue pendant 30 minutes à 20°C. La composition obtenue présente une valeur de pH mesurée inférieure à 1,0 et est limpide et homogène après stockage pendant une durée d'un mois à 40°C.

### Procédé de nettoyage

On dilue à 3% dans l'eau la composition préparée au paragraphe précédent et la solution ainsi obtenue est pulvérisée sur la paroi en aluminium à nettoyer. Cette paroi est ensuite rincée avec de l'eau chaude à 60°C.

Les définitions des produits utilisés dans les exemples, sont les suivantes :
MICROPEARL^{™} M 100 est une poudre ultra fine au toucher très doux et à action matifiante commercialisée par la société MATSUMO
SEPICIDE^{™} CI, imidazolidine urée, est un agent conservateur commercialisé par la société SEPPIC.
SIMULSOL^{™} 165 est du stéarate de glycérol auto-émulsionnable commercialisée par la société SEPPIC.
SEPICIDE^{™} HB, qui est un mélange de phénoxyéthanol, de méthylparaben, d'éthylparaben, de propylparaben et de butylparaben, est un agent conservateur commercialisé par la société SEPPIC.
PARSOL^{™} MCX est du para-méthoxy cinnamate d'octyle ; commercialisé par la société GIVAUDAN.
LANOL^{™} 37T est du triheptanoate de glycérol, commercialisé par la société SEPPIC.
SOLAGUM^{™} L est un carraghénane commercialisé par la société SEPPIC.
EUSOLEX^{™} 4360 est un filtre solaire commercialisé par la société MERCK.
DEEPALINE^{™} PVB, est un hydrolysât de protéines de blé acylé commercialisé par la société SEPPIC.
PRIMOL^{™} 352 est une huile minérale commercialisée par la société EXXON.
PECOSIL^{™}PS 100 est du Dimethicone PEG-7 commercialisé par la société PHOENIX.
Montanov^{™}68 (nom INCI Cetearyl Alcohol (and) Cetearyl Glucoside) est un agent émulsionnant commercialisé par la Société SEPPIC
Montanov^{™}L (nom INCI C14-22 Alcohols (and) C12-20 Alkyl Glucoside) est un agent émulsionnant commercialisé par la Société SEPPIC.
Montanov^{™}202 (nom INCI Arachidyl Alcohol & Behenyl Alcohol & Arachidyl) ) est un agent émulsionnant commercialisé par la Société SEPPIC.

## Revendications

1. Composition détergente (F) à usage ménager ou industriel comprenant comme agent épaississant un latex inverse auto-inversible comprenant une phase aqueuse comprenant:
a) Un polyélectrolyte anionique réticulé (P) constitué de :
- Au moins une première unité monomérique issue de l'acide 2-méthyl-2-[(1-oxo-2-propényl) amino] 1-propanesulfonique sous forme d'acide libre ou partiellement ou totalement salifiée ;
- Au moins une deuxième unité monomérique issue d'au moins un monomère choisi parmi les éléments du groupe constitué par l'acrylate de (2-hydroxy éthyle), l'acrylate de (2,3-dihydroxy propyle), le méthacrylate de (2-hydroxy éthyle), le méthacrylate de (2,3-dihydroxypropyle), ou le vinyl pyrrolidone; et
- au moins une unité monomérique issue d'un monomère de réticulation (AR) polyéthylénique,
b) Au moins un composé séquestrant (SQ) choisi parmi les éléments du groupe constitué par l'éthylenediamine disuccinique acide sous forme de sel trisodique, le sel tétrasodique du glutamique acide, N,N diacetic, et le sel de sodium de l'acide imminosuccinique.

2. Composition détergente selon la revendication 1, **caractérisée en ce que** la phase aqueuse du latex inverse comprend au moins 0,01% de l'agent séquestrant (SQ) .

3. Composition détergente selon l'une des revendications 1 ou 2, **caractérisée en ce que** le monomère de réticulation (AR) polyéthylénique est choisi parmi le méthylènebis(acrylamide), le diméthacrylate d'éthylène glycol, le diacrylate de diéthylèneglycol, le diacrylate d'éthylène glycol, le diallyl urée, le triallylamine, le triméthylol propanetriacrylate, l'acide diallyoxyacétique ou un de ses sels comme le diallyloxyacétate de sodium, ou un mélange de ces composés.

4. Composition détergente selon l'une des revendications 1 à 3, **caractérisé en ce que** le monomère de réticulation (AR) est du méthylène bis(acrylamide) ou du triallylamine.

5. Composition détergente selon l'une des revendications 1 à 4, **caractérisée en ce que** le polyélectrolyte anionique réticulé de la phase aqueuse du latex inverse comprend pour 100% molaire :
a) Une proportion entre 10% et 95% de l'unité monomérique issue de l'acide 2-méthyl-2-[(1-oxo-2-propényl) amino] 1-propanesulfonique sous forme d'acide libre ou partiellement ou totalement salifiée ;
b) Une proportion entre 5% et 90% de l'unité monomérique issue d'au moins un monomère choisi parmi les éléments du groupe constitué par l'acrylate de (2-hydroxy éthyle), l'acrylate de (2,3-dihydroxy propyle), le méthacrylate de (2-hydroxy éthyle), le méthacrylate de (2,3-dihydroxypropyle), ou le vinyl pyrrolidone, et
c) une proportion supérieure à 0% molaire et inférieure ou égale à 1% molaire d'unités monomériques issues d'au moins un monomère de réticulation (AR) polyéthylénique.

6. Composition détergente selon l'une des revendications 1 à 5, **caractérisée en ce qu'**elle comprend entre 0,1% et 10% massique dudit latex inverse.

7. Procédé de préparation d'une composition détergente telle que définie à l'une des revendications 1 à 6, comprenant une étape de préparation du latex inverse comprenant les sous-étapes suivantes :
a) Préparation de la phase aqueuse telle que définie à l'une des revendications 1 à 5,
b) Préparation d'une phase organique comprenant au moins une huile (H) et un système tensioactif émulsionnant de type eau-dans-huile (S₁),
c) Mélange de la phase aqueuse et de la phase organique préparées aux étapes a) et b) et émulsification de manière à former une émulsion,
d) Inertage de l'émulsion à l'azote,
e) Amorçage de la réaction de polymérisation par introduction dans l'émulsion inertée d'un initiateur de radicaux libres, et
f) Introduction dans le milieu réactionnel issu de l'étape e) d'un système tensioactif émulsionnant de type huile-dans-eau (S₂) à une température comprise entre 30 et 60°C.

8. Procédé selon la revendication 7, **caractérisé en ce qu'**à l'étape e) l'initiateur de radicaux est un couple oxydo-réducteur générateur d'ions hydrogénosulfite (HSO3-), tel que le couple hydropéroxyde de cumène -métabisulfite de sodium (Na2S2O5) ou le couple hydropéroxyde de cumène-chlorure de thionyle (SOCl2).

9. Procédé selon l'une des revendications 7 ou 8, **caractérisé en ce qu'**à l'étape e) on introduit dans l'émulsion inertée un co-initiateur de polymérisation, de préférence de l'azo-bis(isobutyronitrile).

10. Procédé selon l'une des revendications 7 à 9, **caractérisé en ce qu'**à l'étape a) le pH de la phase aqueuse est ajusté entre 3,0 et 7,0.

11. Procédé selon l'une des revendications 7 à 10, **caractérisé en ce que** le milieu réactionnel issu de l'étape e) est concentré par distillation avant la mise en œuvre de l'étape f).

12. Procédé selon l'une des revendications 7 à 11, **caractérisé en ce que** le milieu réactionnel issu de l'étape e) ou f) est séché par atomisation.

13. Utilisation dudit latex inverse tel que défini à l'une des revendications 1 à 5, comme agent épaississant et/ou émulsionnant et/ou stabilisant d'une composition aqueuse liquide détergente à usage ménager ou industriel.

14. Composition aqueuse liquide détergente (F) à usage ménager ou industriel, **caractérisée en ce qu'**elle comprend comme agent épaississant, pour 100% de sa masse totale entre 0,1% et 10% massique dudit latex inverse, tel que défini à l'une des revendications 1 à 5.

15. Utilisation de ladite composition aqueuse liquide détergente (F) telle que définie à l'une des revendications 1 à 6, pour nettoyer les surfaces solides.

16. Procédé de nettoyage d'une surface solide, **caractérisé en ce qu'**il comprend au moins une première étape d'application de ladite composition détergente (F) telle que définie à l'une des revendications 1 à 6, suivie d'au moins une deuxième étape de rinçage de ladite surface solide.

## Patentansprüche

1. Reinigungsmittel (F) zur Verwendung im Haushalt oder in der Technik, umfassend als Verdickungsmittel einen selbstinvertierbaren inversen Latex, der eine wässrige Phase umfasst, die Folgendes umfasst:
a) einen vernetzten anionischen Polyelektrolyten (P), bestehend aus:
- mindestens einer ersten Monomereinheit, die sich von 2-Methyl-2-[(1-oxo-2-propenyl)amino]-1-propan-sulfonsäure in Form der freien Säure oder teilweise oder vollständig versalzter Form ableitet;
- mindestens einer zweiten Monomereinheit, die sich von mindestens einem Monomer ableitet, das aus den Elementen der Gruppe bestehend aus (2-Hydroxyethyl)acrylat, (2,3-Dihydroxypropyl)acrylat, (2-Hydroxyethyl)methacrylat, (2,3-Dihydroxypropyl)-methacrylat oder Vinylpyrrolidon ausgewählt ist; und
- mindestens einer Monomereinheit, die sich von einem polyethylenischen Vernetzungsmonomer (AR) ableitet;
b) mindestens eine sequestrierende Verbindung (SQ), die aus den Elementen der Gruppe bestehend aus Ethylendiamindibernsteinsäure in Trinatriumsalz-Form, dem Tetranatriumsalz von Glutaminsäure-N,N-diessig und dem Natriumsalz von Iminobernsteinsäure ausgewählt ist.

2. Reinigungsmittel nach Anspruch 1, **dadurch gekennzeichnet, dass** die wässrige Phase des inversen Latex mindestens 0,01 % des Sequestriermittels (SQ) umfasst.

3. Reinigungsmittel nach Anspruch 1 oder 2, **dadurch gekennzeichnet, dass** das polyethylenische Vernetzungsmonomer (AR) aus Methylenbis(acrylamid), Ethylenglykoldimethacrylat, Diethylenglykoldiacrylat, Ethylenglykoldiacrylat, Diallylharnstoff, Triallylamin, Trimethylolpropantriacrylat, Diallyloxyessigsäure oder einem Salz davon wie Natriumdiallyloxyacetat oder einer Mischung davon ausgewählt ist.

4. Reinigungsmittel nach einem der Ansprüche 1 bis 3, **dadurch gekennzeichnet, dass** es sich bei dem Vernetzungsmonomer um Methylenbis(acrylamid) oder Triallylamin handelt.

5. Reinigungsmittel nach einem der Ansprüche 1 bis 4, **dadurch gekennzeichnet, dass** der vernetzte anionische Polyelektrolyt der wässrigen Phase des inversen Latex auf 100 Mol-% Folgendes umfasst:
a) einen Anteil zwischen 10 % und 95 % der Monomereinheit, die sich von 2-Methyl-2-[(1-oxo-2-propenyl)amino]-1-propansulfonsäure in Form der freien Säure oder teilweise oder vollständig versalzter Form ableitet;
b) einen Anteil zwischen 5 % und 90 % der Monomereinheit, die sich von mindestens einem Monomer ableitet, das aus den Elementen der Gruppe bestehend aus (2-Hydroxyethyl)acrylat, (2,3-Dihydroxypropyl)acrylat, (2-Hydroxyethyl)-methacrylat, (2,3-Dihydroxypropyl)methacrylat oder Vinylpyrrolidon ausgewählt ist; und
c) einen Anteil von mehr als 0 Mol-% und weniger als oder gleich 1 Mol-% Monomereinheiten, die sich von einem mindestens polyethylenischen Vernetzungsmonomer (AR) ableiten.

6. Reinigungsmittel nach einem der Ansprüche 1 bis 5, **dadurch gekennzeichnet, dass** es zwischen 0,1 und 10 Massen-% des selbstinvertierbaren inversen Latex umfasst.

7. Verfahren zur Herstellung eines Reinigungsmittels gemäß einem der Ansprüche 1 bis 6, umfassend einen Schritt der Herstellung des inversen Latex, der folgende Teilschritte umfasst:
a) Herstellen der wässrigen Phase gemäß einem der Ansprüche 1 bis 5,
b) Herstellen einer organischen Phase, die mindestens ein Öl (H) und ein emulgierendes Tensidsystem (S₁) vom Wasser-in-Öl-Typ umfasst,
c) Mischen der wässrigen Phase und der organischen Phase, die in den Schritten a) und b) hergestellt wurden, und Emulgieren zur Bildung einer Emulsion,
d) Inertisieren der Emulsion mit Stickstoff,
e) Starten der Polymerisationsreaktion durch Eintragen eines Radikalinitiators in die inertisierte Emulsion und
f) Eintragen eines emulgierendenden Tensidsystems (S₂) vom Öl-in-Wasser-Typ bei einer Temperatur zwischen 30 und 60 °C in das Reaktionsmedium aus Schritt e).

8. Verfahren nach Anspruch 7, **dadurch gekennzeichnet, dass** es sich in Schritt e) bei dem Radikalinitiator um ein Hydrogensulfit (HSO₃⁻)-Ionen erzeugendes Redoxpaar handelt, wie das Paar Cumolhydroperoxid-Natriummetabisulfit (Na₂S₂O₅) oder das Paar Cumolhydroperoxid-Thionylchlorid (SOCl₂).

9. Verfahren nach Anspruch 7 oder 8, **dadurch gekennzeichnet, dass** man in Schritt e) einen Polymerisationscoinitiator, vorzugsweise Azo(bisisobutyronitril), in die inertisierte Emulsion einträgt.

10. Verfahren nach einem der Ansprüche 7 bis 9, **dadurch gekennzeichnet, dass** in Schritt a) der pH-Wert der wässrigen Phase zwischen 3,0 und 7,0 eingestellt wird.

11. Verfahren nach einem der Ansprüche 7 bis 10, **dadurch gekennzeichnet, dass** das Reaktionsmedium aus Schritt e) vor der Durchführung von Schritt f) durch Destillation aufkonzentriert wird.

12. Verfahren nach einem der Ansprüche 7 bis 11, **dadurch gekennzeichnet, dass** das Reaktionsmedium aus Schritt e) oder f) sprühgetrocknet wird.

13. Verwendung des inversen Latex gemäß einem der Ansprüche 1 bis 5 als Verdickungsmittel und/oder Emulgator und/oder Stabilisator für ein flüssiges wässriges Reinigungsmittel zur Verwendung im Haushalt oder in der Technik.

14. Flüssiges wässriges Reinigungsmittel (F) zur Verwendung im Haushalt oder in der Technik, **dadurch gekennzeichnet, dass** es als Verdickungsmittel auf 100 % seiner Gesamtmasse zwischen 0,1 und 10 Massen% des inversen Latex gemäß einem der Ansprüche 1 bis 5 umfasst.

15. Verwendung des flüssigen wässrigen Reinigungsmittels (F) gemäß einem der Ansprüche 1 bis 6 zum Reinigen von festen Oberflächen.

16. Verfahren zur Reinigung einer festen Oberfläche, **dadurch gekennzeichnet, dass** es mindestens einen ersten Schritt des Aufbringens des Reinigungsmittels (F) gemäß einem der Ansprüche 1 bis 6 gefolgt von mindestens einem zweiten Schritt des Spülens der festen Oberfläche umfasst.

## Claims

1. Detergent composition (F) for domestic or industrial use comprising, as thickener, a self-invertible inverse latex comprising an aqueous phase comprising:
a) a crosslinked anionic polyelectrolyte (P) consisting of:
- at least one first monomer unit derived from 2-methyl-2-[(1-oxo-2-propenyl)amino]-1-propanesulfonic acid in free acid form or partially or totally salified form;
- at least one second monomer unit derived from at least one monomer chosen from the elements of the group consisting of 2-hydroxyethyl acrylate, 2,3-dihydroxypropyl acrylate, 2-hydroxyethyl methacrylate, 2,3-dihydroxypropyl methacrylate, or vinylpyrrolidone; and
- at least one monomer unit derived from a polyethylenic crosslinking monomer (AR),
b) at least one sequestrant compound (SQ) chosen from the elements of the group consisting of ethylenediaminedisuccinic acid in trisodium salt form, the glutamic acid, N,N-diacetic acid, tetrasodium salt, and the sodium salt of iminosuccinic acid.

2. Detergent composition according to Claim 1, **characterized in that** the aqueous phase of the inverse latex comprises at least 0.01 % of the sequestrant (SQ).

3. Detergent composition according to Claim 1 or 2, **characterized in that** the polyethylenic crosslinking monomer (AR) is chosen from methylenebis(acrylamide), ethylene glycol dimethacrylate, diethylene glycol diacrylate, ethylene glycol diacrylate, diallylurea, triallylamine, trimethylolpropane triacrylate, diallyloxyacetic acid or a salt thereof, such as sodium diallyloxyacetate, or a mixture of these compounds.

4. Detergent composition according to one of Claims 1 to 3, **characterized in that** the crosslinking monomer (AR) is methylenebis(acrylamide) or triallylamine.

5. Detergent composition according to one of Claims 1 to 4, **characterized in that** the crosslinked anionic polyelectrolyte of the aqueous phase of the inverse latex comprises for 100 mol%:
a) a proportion of between 10 % and 95 % of the monomer unit derived from 2-methyl-2-[(1-oxo-2-propenyl)amino]-1-propanesulfonic acid in free acid form or partially or totally salified form;
b) a proportion of between 5 % and 90 % of the monomer unit derived from at least one monomer chosen from the elements of the group consisting of 2-hydroxyethyl acrylate, 2,3-dihydroxypropyl acrylate, 2-hydroxyethyl methacrylate, 2,3-dihydroxypropyl methacrylate, or vinylpyrrolidone, and
c) a proportion of greater than 0 mol% and less than or equal to 1 mol% of monomer units derived from at least one polyethylenic crosslinking monomer (AR).

6. Detergent composition according to one of Claims 1 to 5, **characterized in that** it comprises between 0.1 % and 10 % by weight of said inverse latex.

7. Process for preparing a detergent composition as defined in one of Claims 1 to 6, comprising a step of preparing the inverse latex comprising the following substeps:
a) preparing the aqueous phase as defined in one of Claims 1 to 5,
b) preparing an organic phase comprising at least one oil (O) and an emulsifying surfactant system of waterin-oil type (S₁),
c) mixing the aqueous phase and the organic phase prepared in steps a) and b) and emulsifying so as to form an emulsion,
d) inerting the emulsion with nitrogen,
e) initiating the polymerization reaction by introducing a free-radical initiator into the inerted emulsion, and
f) introducing into the reaction medium resulting from step e) an emulsifying surfactant system of oil-in-water type (S₂) at a temperature between 30°C and 60°C.

8. Process according to Claim 7, **characterized in that**, in step e), the radical initiator is a redox pair which generates hydrogen sulfite (HSO₃⁻) ions, such as the cumene hydroperoxide/sodium metabisulfite (Na₂S₂O₅) pair or the cumene hydroperoxide/thionyl chloride (SOCl₂) pair.

9. Process according to Claim 7 or 8, **characterized in that**, in step e), a polymerization coinitiator, preferably azobis(isobutyronitrile), is introduced into the inerted emulsion.

10. Process according to one of Claims 7 to 9, **characterized in that**, in step a), the pH of the aqueous phase is adjusted between 3.0 and 7.0.

11. Process according to one of Claims 7 to 10, **characterized in that** the reaction medium derived from step e) is concentrated by distillation before carrying out step f).

12. Process according to one of Claims 7 to 11, **characterized in that** the reaction medium derived from step e) or f) is spray-dried.

13. Use of said inverse latex as defined in one of Claims 1 to 5, as a thickener and/or emulsifier and/or stabilizer for an aqueous liquid detergent composition for domestic or industrial use.

14. Aqueous liquid detergent composition (F) for domestic or industrial use, **characterized in that** it comprises as thickener, per 100 % of its total weight, between 0.1 % and 10 % by weight of said inverse latex, as defined in one of Claims 1 to 5.

15. Use of said aqueous liquid detergent composition (F) as defined in one of Claims 1 to 6, for cleaning solid surfaces.

16. Process for cleaning a solid surface, **characterized in that** it comprises at least one first step of applying said detergent composition (F) as defined in one of Claims 1 to 6, followed by at least one second step of rinsing said solid surface.
